# EUROPEAN PATENT SPECIFICATION

(11) **EP 3 899 274 B1**
(45) Date of publication and mention of the grant of the patent: **11.10.2023**
(21) Application number: 19817816.2
(22) Date of filing: 03.12.2019
(51) Int. Cl.: F04B 17/04, F04B 35/04

(54) **PISTON COMPRESSOR**
KOLBENVERDICHTER
COMPRESSEUR À PISTON

(30) Priority: 18.12.2018 BE 201805894
(43) Date of publication of application: 27.10.2021
(73) Proprietor: ATLAS COPCO AIRPOWER, naamloze vennootschap, 2610 Wilrijk (BE); Vrije Universiteit Brussel, 1050 Brussel (BE)
(72) Inventor: VERRELST, Björn, 2610 Wilrijk (BE); BECKERS, Jarl, 1050 Brussel (BE)
(74) Representative: Van Minnebruggen, Ewan Benito Agnes
(86) International application number: PCT/IB2019/060401
(87) International publication number: WO 2020/128698

(56) References cited:
- EP-A1- 0 566 959
- WO-A1-2004/025814
- WO-A1-2009/120670
- DE-A1- 4 129 018
- DE-A1-102006 060 147
- DE-B4-102006 060 147
- US-A1- 2006 127 252
- US-A1- 2012 098 357
- US-A1- 2017 298 916

## Description

The present invention relates to a piston compressor.

More specifically, but without limitations, the invention relates to a high capacity piston compressor, for instance with a capacity of more than 30 kW to 600 kW or higher.

Such piston compressors are used, for instance, for the compression of gases at a very high operating pressure, for instance of 2000 kPa or more.

Traditionally, a piston compressor contains a piston compressor element that features a housing with a compression chamber in which a piston is arranged movably back and forth in an axial direction between an upper dead point and a lower dead point by means of drive shaft driven by a rotary motor, and in which a kinematic mechanism is provided between this drive shaft and the piston in the form of a crank and rod mechanism, and possibly also an extra piston rod that moves linearly with the piston and forms a link between the piston and the crank and rod mechanism.

For the realization of such high gas pressures, usually, a multistage piston compressor is used with two or more of the aforementioned piston compressor elements that are serially connected with each other via their gas inlets and their gas outlets, and which are mounted on a joint drive group in the form of a housing in which a joint drive shaft is supported, with a crank and rod mechanism connected to each piston compressor element and possibly a piston rod for linking the pistons with the crank and rod mechanism.

The drive group features a rotary motor, typically an electrical motor, for driving the joint drive shaft, in most cases via a belt drive. Such a belt drive has the advantage of being relatively inexpensive, but it also has the disadvantage of being responsible for a relatively large loss of power, up to 3 to 5% of the nominal capacity of the motor.

It goes without saying that the drive group must be designed to handle the full capacity of the motor, and therefore also its full compression capacity, and it is therefore relatively heavy and bulky in case of a piston compressor with a high capacity.

In view of the high mechanical forces acting in the crank and rod mechanism, typically, oil film bearings are used, which may be responsible for a loss of power of between 5% and 10%, and which furthermore require a complex injection system in order to provide the bearings with sufficient oil in all circumstances.

In order to prevent the compressed gas from leaking into the housing of the drive group and escaping via the drive shaft, especially designed axial seals are used, by means of which the housing can never be entirely hermetically sealed.

Also previously known is an application of a piston compressor, in which a piston is moved back and forth by electromagnetic activation in order to compress a gas in the compression chamber. This application is limited to low capacities, however. Academic research of higher capacities has led to extremely heavy and bulky compressors with, for instance, a piston of 400 kg for a capacity of 30 kW.

Moreover, this application requires a more complicated motion control with wide safety margins in order to avoid a collision between the head of the piston and the end wall of the compression chamber at the end of the compression stroke. Taking into account this wide safety margin, when reaching the upper dead point, there must always be enough play between the piston and the end wall of the compression chamber, which results in a smaller field of application of the piston compressor, because it also allows for building up a smaller pressure than would be theoretically possible with a smaller safety margin, and also results in a lower volumetric gain.

The document EP 0 566 959 discloses a linear piston compressor which is driven by electromagnetic drive acting on the frontal surface of the piston, whereby the movement of the piston is limited by a mechanical kinematic.

The document US 2012/098357 discloses a linear piston compressor provided with a linear electromagnetic drive and additionally a rotary drive acting on the crank shaft.

The task of the present invention is to offer a solution to one or more of the aforementioned and other disadvantages.

For these purposes, the invention relates to a piston compressor containing a housing with a compression chamber in it, having an inlet and an outlet and a piston arranged movably back and forth in an axial direction in the compression chamber between an upper dead point and a lower dead point by means of a drive, delimited by a kinematic mechanism with which the piston is connected, in which the drive is formed exclusively by an electromagnetic linear drive of the piston.

Because the piston or pistons are no longer driven via a crank and rod mechanism, as is customary, a rotary drive motor is no longer necessary, and the drive group with the crank and rod mechanism can be executed in a much more compact, light, and less expensive manner.

Furthermore, such a piston compressor according to the invention is much more efficient, due to the elimination of the losses in the motor and the belt drive, and because the customary "fluid bearings" can be replaced by more traditional bearings with a lower loss, which furthermore do not require lubrication, as opposed to closed grease-lubricated bearings such as grease-lubricated roller bearings, i.e. bearings with rolling elements that are enclosed in a space between an inner ring and an outer that is filled with grease, but "smaller" fluid bearings continue to be possible as well.

Maintaining the kinematic mechanism ensures that there is no risk of the piston colliding with the end wall of the compression chamber at its upper dead point at the end of the compression stroke, so that a very small safety margin can be used, allowing the piston to approach this end wall very closely, with a minimal headroom between the two. This is useful, because the smaller the headroom, the larger the mounted pressure of the gas in the compression chamber, and therefore the greater the field of application of the compressors.

As a result, a piston compressor according to the invention also does not require complex controls for maintaining a minimal headroom.

Any small deviations at the end of the compression stroke are absorbed by the kinematic mechanism, which does not allow the piston to move beyond its upper dead point.

Preferably, the piston is driven at a frequency approximately corresponding with that of the piston compressor's eigenfrequency, specifically with the eigenfrequency of the entirety of the piston and the kinematic mechanism combined with a pneumatic, mechanical, or electromechanical spring. This allows for an energetically more efficient manner of compressing a gas.

The kinematic mechanism preferably contains a simple traditional crank and rod mechanism with a crank that is rotatable around a crank shaft perpendicular to the direction of the linear movement of the piston, as well as a driving rod with a hinged connection at one end with the crank by means of a crank pin and a hinged connection at its other end with the piston by means of a piston pin, wherein the crank shaft, the crank pin, and the piston pin are preferably borne by closed grease-lubricated bearings.

Since the housing of the piston compressor has no input or output shaft for driving the piston, and since no external lubrication of the bearings is needed, the housing may be completely hermetically sealed, with the obvious exception of the gas inlet and the gas outlet to and from the compression chamber.

Furthermore, the electromagnetic drive, according to the invention, comprises an indirect electromagnetic drive of the piston, with a plunger that is connected with the piston and moves synchronously back and forth with it in a linear guide or housing that extends parallel to the axial direction of the compression chamber, and with one or several coils arranged around the linear guide that are capable of interacting inductively with the respective plunger.

The invention also relates to a multistage piston compressor with at least two compression chambers serially connected with each other by means of their inlet and outlet, and in which a piston can be moved back and forth by means of a linear electromagnetic drive, and every piston is connected with a kinematic mechanism of its own.

Possibly, in this case, at least two of the kinematic mechanisms are mechanically connected with each other, such that they move synchronously. In the case of a crank and rod mechanism, the cranks of these at least two mechanisms are mounted on a joint crank shaft.

In order to better demonstrate the features of the present invention, some examples are described hereinafter, in an exemplary manner and without any restrictive character, of a piston compressor according to the invention, with reference to the accompanying figures, wherein
Figure 1 schematically shows a customary piston compressor;
Figure 2 shows a graph of the forces operating when the piston compressor of Figure 1 is in use;
Figure 3 is a schematic representation of a piston compressor according to the invention;
Figure 4 shows a graph of the forces operating on the piston of the piston compressor of Figure 3, together with the forces of the graph of Figure 2, for comparison purposes;
Figures 5 show a variant embodiment of a piston compressor according to the invention;
Figures 6 and 7 show two different variants of a multistage piston compressor according to the invention.

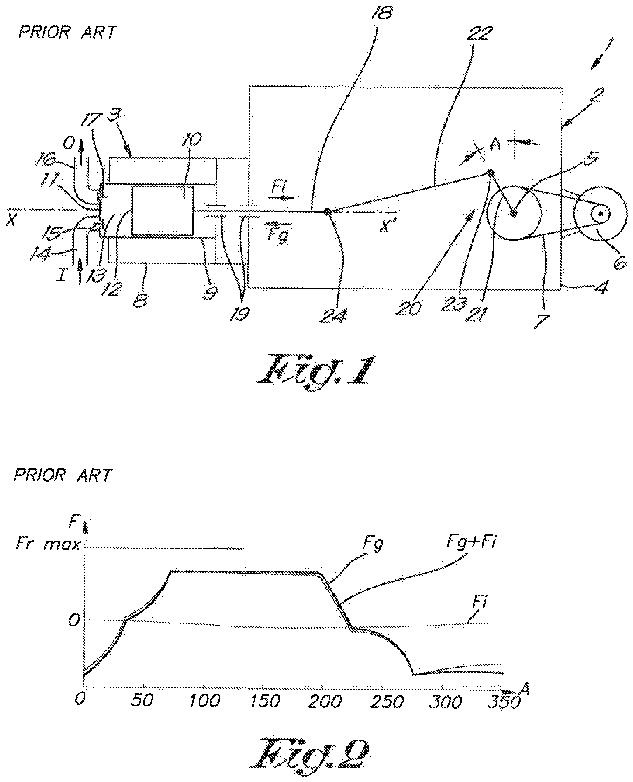

The prior art piston compressor 1 shown in Figure 1 contains a drive group 2 and a piston compressor element 3 mounted on it.

The drive group 2 contains a housing4, in which a drive shaft 5 is rotatably supported and is driven by means of an electrical rotary motor 6 via a belt transmission 7.

The piston compressor element 3 features a housing 8 mounted on the housing 4 of the drive group 2, featuring a cylinder mantle 9 in which a piston 10 is arranged movably back and forth in an axial direction X-X', and which is closed off on one side by an end wall 11.

Between the piston crown 12, the aforementioned end wall 11, and the cylinder mantle 9 of the piston compressor element 3, a compression chamber 13 is enclosed, connected in a common manner via a sealable inlet 14 with an inlet valve 15 and via a sealable outlet 16 with an outlet valve 17 with the surroundings for suctioning in a gas for compression as indicated by arrow I, and for expressing the gas at the end of a compression stroke in the direction of arrow O.

During the compression stroke, the piston 10 moves from a so-called lower dead point farthest from the end wall 11 in the direction of the end wall 11 to a so-called upper dead point closest to the end wall 11, and does so with closed inlet and outlet valves 15 and 17.

In the upper dead point, the volume of the compression chamber 13, the so-called dead volume, is smallest, and the pressure of the gas in the compression chamber 13 at that moment is strong.

Connected to the piston 10 is a piston rod 18, extending in the axial direction X-X' and capable of moving back and forth synchronously with the piston 10 in a sealing guide 19 of the housing that forms a gas seal between the housing 8 of the piston compressor element 3 and the housing 4 of the drive group 2 in order to prevent the compressed gas from leaking out via the housing 4 of the drive group 2 and the passage of the drive shaft.

Between the piston rod 18 and the drive shaft 5, a kinematic mechanism 20 is provided for the transformation of the rotary movement of the drive shaft 5 into a back and forth movement of the piston 10.

In the case of Figure 1, this is a crank and rod mechanism with a radially focused crank 21 that rotates with the drive shaft 5 and a driving rod 22 that is pivotally attached on one end with the crank 21 by means of a crank pin 23, and on the other end with the piston 10 or the piston rod 18 by means of a piston pin 24.

The operations of the piston compressor according to prior art are simple, as follows.

The drive shaft 5 is driven by the motor 6 in one direction, such that the crank 21 is brought into a rotary movement and the piston 10 is moved back and forth.

With any suctioning stroke from the upper dead point to the lower dead point, gas is suctioned into the compression chamber 13 via the inlet 14, whereas with any movement in the opposite direction from the lower dead point to the upper dead point, the suctioned gas is compressed as the inlet valve 15 and the outlet valve 17 are closed.

During operation, the piston rod 18 and the piston pin 24 are subject to gas forces Fg and to sinusoidal inertia forces Fi with their harmonics as shown in Figure 1, of which the momentary value is shown in the graph of Figure 2 as a function of the pivoting angle A of the crank 21. The gas force Fg is obviously proportional to the required operating pressure of the piston compressor 1.

In this graph, the resulting force Fg+Fi acting on the piston rod 18 and on the piston pin 24, which is the sum of the forces Fg and Fi, is shown as well. During the compression stroke of the piston 10, this is a compression force by which the piston rod 18 is compressed.

Constructively, this resulting force may not be higher than a certain maximum value Frmax, which is primarily determined by the compressive strength of the piston rod 18 and/or the strength of the piston pin 24, and which is often the limiting factor for the design, or the choice, of a piston compressor as a function of the desired operating pressure, and a drive group must be chosen with a piston rod and a piston pin that are sufficiently strong for handling the desired gas pressure.

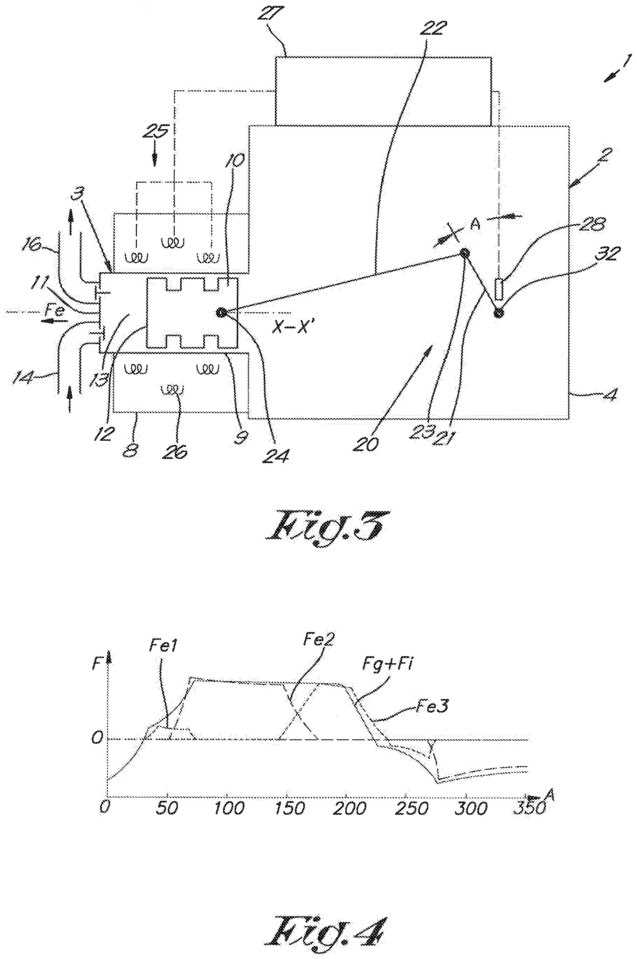

As schematically shown in Figure 3, the piston compressor 1 according to the invention differs from the traditional piston compressor 1 of Figure 1 in that in the case of the invention, no motor 6 is present for driving the piston 10 via the kinematic mechanism 20, and instead, the drive of the piston 10 is formed exclusively by an electromagnetic linear drive 25 of the piston 10.

In this case, the piston is also connected directly, meaning: without interventions of a piston rod, with the kinematic mechanism 20.

The electromagnetic linear drive 25 is formed by one or more electrical coils 26 arranged around or along the cylinder chamber 13, and which directly and inductively exerts an axial force Fe on the piston 10 when powered by a control 27, which is executed for that purpose in a suitable magnetic conducting material, or may, for instance, have one or more permanent magnets, not shown here.

In the case of Figure 3, three coils 26 are provided, which can be powered separately or jointly in order to apply a certain force curve to the piston 10 in order to move it back and forth in an appropriate manner, including the gas that is to be compressed in the compression chamber 13.

For these purposes, the piston compressor 1 features means 28 for identifying the current position of the piston 10, for instance in the form of means for measuring the angle A of the crank 21 at a given moment, which means are connected with the controls 27.

As a function of the measured angle A, each of the coils 26 is powered separately in order to subject the piston 10 during a revolution of the crank 21 to three electromagnetic forces Fe1, Fe2, and Fe3, as shown in the graph of Figure 4, in which the force curves of these three forces Fe1, Fe2, and Fe3 may overlap with each other in time in order to optimally approach the forces graph Fg+Fi of Figure 2 in order to generate a resulting force that ensures that at the upper and lower dead point, the direction of the resulting force is reversed.

The control program of the controls 27 does not necessarily have to be very accurate, since the kinematic mechanism 20 imposes a limit on the back and forth movements of the piston 10 between the lower and the upper dead point, such that there is no risk that the piston 10 would collide with the end wall 11 at the end of the compression stroke, even in case of a small deviation from the resulting force curve that would prevent the direction of the resulting force from changing when the upper or lower dead point is reached.

There is therefore no need for the design of the controls to take into account a wide safety margin, as a result of which the dead volume between the piston 10 and the end wall 11 of the compression chamber 13 can be reduced to a minimum, allowing for the realization of higher pressures.

The frequency of the back and forth movement of the piston preferably corresponds with the eigenfrequency of the piston compressor, specifically with the eigenfrequency of the entirety of the piston 10 and the kinematic mechanism 20 combined with a pneumatic, mechanical, or electromechanical spring, for instance formed by the compressed air in the compression chamber 13, as a result of which an energy-efficient compression can be realized.

Since in the case of the invention, a motor 6 and a belt transmission 7 are missing, the kinematic mechanism 20 does not have to transmit forces for driving the piston 10, and as a result, this kinematic mechanism 20 can be designed in a much lighter and less sturdy manner, and the requirements for the bearings and the lubrication of this kinematic mechanism 20 can be much lower.

For the same reason, the internal space that is delimited by the housings 4 and 8 can be hermetically closed by the piston.

It is clear that the piston 10 can be connected with the kinematic mechanism 20 by means of a piston rod 18 connected with the piston 10. Since the piston is not driven by this piston rod 18, the forces exerted on it are therefore much lower than in the case of a traditional piston compressor driven by a rotary motor.

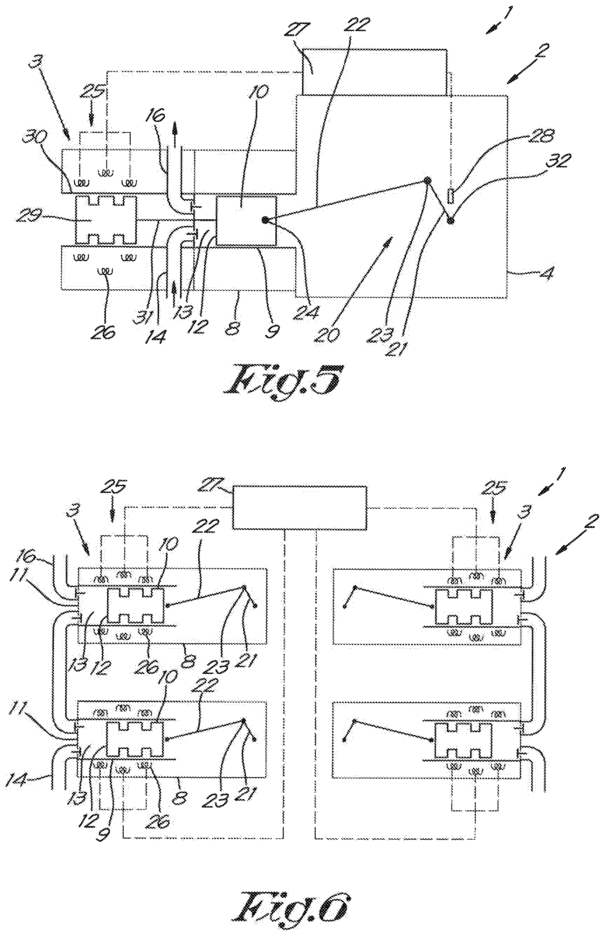

Figure 5 shows a variation of a piston compressor 1 according to the invention, in which in this case, the piston 10 is a traditional piston without coils 26 around the cylinder mantle 9, but in which the electromagnetic drive 25 of the piston 10 is realized by means of an external plunger 29 that is arranged movably back and forth in a linear guide 30, with one or more coils 26 arranged around it, capable of interacting inductively with the respective plunger 29 when powered in order to indirectly drive the piston 10 electromagnetically via a connection rod 31 that extends outward through the compression chamber 13 and the aforementioned end wall 11.

It is clear that a combination is also possible of a direct drive of the piston 10 with an indirect drive via an internal or external plunger 29.

It is furthermore possible to execute the piston 10 and one or several plungers 29 as a linear motor, more specifically as a linear step motor.

Figure 6 shows a multistage piston compressor 1 with four stages, each having a piston 10 that is driven electromagnetically in a compression chamber 13 of its own, in which the compression chambers 13 are serially connected with each other by means of their inlet 14 and outlet 16.

In this case, each piston 10 is arranged together with its own kinematic mechanism 20 in a hermetically sealed housing 4-8 of its own.

The controls 27 are joint for the four pistons 10 in this case.

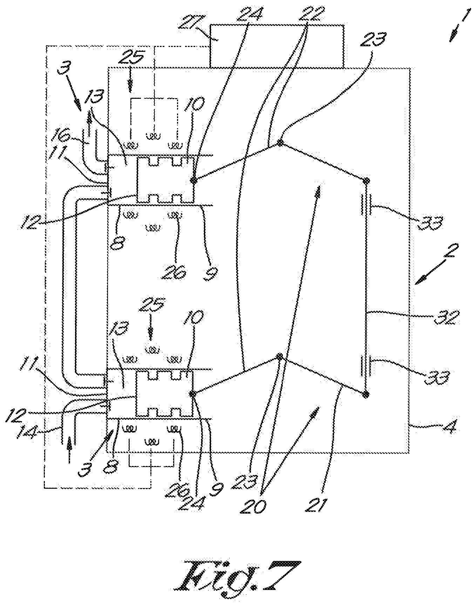

Figure 7 shows a multistage piston compressor 1 with two stages, arranged in a joint hermetically closed housing 4-8, each having a piston 10 and a kinematic mechanism 20 of its own, but in which the two kinematic mechanisms 20 are mechanically connected with each other, in this case since the cranks 21 are arranged on a joint crank shaft 32 that is borne in the housings 4-8 on traditional ball bearings 33.

The present invention is in no way limited to the embodiments described above and shown in the figures. Rather, a piston compressor according to the invention may be realized in different variants without exceeding the framework of this invention.

## Claims

1. A piston compressor containing a housing (8) with a compression chamber (13) in it, having an inlet and an outlet and a piston (10) arranged movably back and forth in an axial direction (X-X') in the compression chamber (13) between an upper dead point and a lower dead point, delimited by a kinematic mechanism (20) with which the piston (10) is connected, **characterized in that** the drive is formed exclusively by an electromagnetic linear drive (25) of the piston (10),wherein the electromagnetic linear drive (25) contains an indirect electromagnetic drive of the piston (10) with a plunger (29), arranged movably back and forth in a linear guide (30) that extends parallel to the axial direction (X-X') of the compression chamber (13), and **in that** one or several coils (26), arranged around or along the linear guide (30), capable of interacting inductively with the respective plunger (29).

2. Piston compressor according to claim 1, **characterized in that** the electromagnetic linear drive (25) contains an indirect electromagnetic drive of the piston (10), wherein the guide (30) of the plunger (29) is arranged in the axial extension (X-X') of the compression chamber (13), and **in that** the plunger (29) is arranged on a rod (18) that is fixedly connected mechanically with the piston (10) and moves back and forth synchronously with the linear movement of the piston (10).

3. Piston compressor according to claim 1 or 2, **characterized in that** the piston (10) and/or the plunger (29) and/or the cylinder mantle (9) and/or the guide (30) features one or more magnets.

4. Piston compressor according to claim 3, **characterized in that** one or more magnets are permanent magnets.

5. Piston compressor according to any one of the preceding claims, **characterized in that** the kinematic mechanism (20) contains a crank and rod mechanism with a crank (21) that is rotatable around a crank shaft (32) perpendicular to the direction of the linear movement of the piston (10) as well as a driving rod (22) with a hinged connection at one end with the crank (21) by means of a crank pin (23) and a hinged connection at its other end with the piston (10) by means of a piston pin (24).

6. Piston compressor according to claim 5, **characterized in that** the piston (10) is connected with the crank and rod mechanism by means of a linear piston rod (18), connected to the piston (10) and moving back and forth synchronously with the piston (10).

7. Piston compressor according to any one of the preceding claims, **characterized in that** the piston compressor (1) features controls (27) for activating the electromagnetic drive (25) during the entire compression stroke of the piston (10) from the lower dead point to the upper dead point of the piston (10).

8. Piston compressor according to claim 9, **characterized in that** the controls (27) are configured to deliver the full compression capacity according to a curve which largely corresponds with the curve of the capacity delivered to the piston (10) by a hypothetical drive of the piston (10) via the kinematic mechanism (20), exclusively by means of a rotary motor (6).

9. Piston compressor according to any one of the preceding claims, **characterized in that** the housing (4-8) contains no input or output shaft for driving the piston (10).

10. Piston compressor according to any one of the preceding claims, **characterized in that** the kinematic mechanism (20) is a crank and rod mechanism with a crank shaft (32), a crank pin (23), and a piston pin (24) that are exclusively borne by means of closed roller bearings.

11. Piston compressor according to any one of the preceding claims, **characterized in that** the housing (4-8) of the piston compressor (1) with the compression chamber with the piston and the kinematic mechanism (20) in it is a hermetically sealed housing.

12. Piston compressor according to any one of the preceding claims, **characterized in that** the frequency of the back and forth movement of the piston (10) corresponds to the eigenfrequency of the piston compressor (1), specifically of the entirety of the piston (10) and of the kinematic mechanism (20) combined with a pneumatic, mechanical, or electromechanical spring.

13. Piston compressor according to any one of preceding claims, **characterized in that** it is a multistage piston compressor (1) with at least two compression chambers (13) that are serially connected with each other by means of their inlet (14) and outlet (16), and in which a piston (10) can be moved back and forth by means of a linear electromagnetic drive (25), and in which each piston (10) is connected with a kinematic mechanism (20) of its own.

14. Piston compressor according to claim 13, **characterized in that** at least two of the kinematic mechanisms are mechanically connected with each other, causing them to move synchronously with each other.

15. Piston compressor according to claims 5 and 14, **characterized in that** if the kinematic mechanism (20) is a crank and rod mechanism, the cranks (21) of at least two of these mechanisms (20) are arranged on a joint crank shaft (32).

16. Piston compressor according to claims 8 and 13, **characterized in that** the control (27) of the linear electromagnetic drive (25) of at least two pistons (10) is joint.

17. Piston compressor according to any one of the preceding claims, **characterized in that** it is a piston compressor (1) with a maximum compression capacity that is greater than 30 kW.

## Patentansprüche

1. Kolbenverdichter, der ein Gehäuse (8) mit einer Verdichtungskammer (13) in sich enthält, der einen Einlass und einen Auslass und einen Kolben (10) aufweist, der in einer axialen Richtung (X-X') in der Verdichtungskammer (13) zwischen einem oberen Todpunkt und einem unteren Todpunkt hin- und herbewegbar angeordnet ist, der durch einen kinematischen Mechanismus (20), mit dem der Kolben (10) verbunden ist, begrenzt wird, **dadurch gekennzeichnet, dass** der Antrieb ausschließlich durch einen elektromagnetischen linearen Antrieb (25) des Kolbens (10) ausgebildet ist, wobei der elektromagnetische lineare Antrieb (25) einen indirekten elektromagnetischen Antrieb des Kolbens (10) mit einem Stößel (29) enthält, der in einer linearen Führung (30), die sich parallel zu der axialen Richtung (X-X') der Verdichtungskammer (13) erstreckt, hin- und herbewegbar angeordnet ist, und **dass** eine oder mehrere Spulen (26), die um oder entlang der linearen Führung (30) angeordnet sind, zu einem induktiven Interagieren mit dem jeweiligen Stößel (29) in der Lage sind.

2. Kolbenverdichter nach Anspruch 1, **dadurch gekennzeichnet, dass** der elektromagnetische lineare Antrieb (25) einen indirekten elektromagnetischen Antrieb des Kolbens (10) enthält, wobei die Führung (30) des Stößels (29) in der axialen Verlängerung (X-X') der Verdichtungskammer (13) angeordnet ist und **dass** der Stößel (29) an einer Stange (18), die mit dem Kolben (10) mechanisch fest verbunden ist und sich mit der linearen Bewegung des Kolbens (10) synchron hin- und herbewegt, angeordnet ist.

3. Kolbenverdichter nach Anspruch 1 oder 2, **dadurch gekennzeichnet, dass** der Kolben (10) und/oder der Stößel (29) und/oder der Zylindermantel (9) und/oder die Führung (30) einen oder mehrere Magnete besitzen.

4. Kolbenverdichter nach Anspruch 3, **dadurch gekennzeichnet, dass** ein oder mehrere Magnete Permanentmagnete sind.

5. Kolbenverdichter nach einem der vorstehenden Ansprüche,
**dadurch gekennzeichnet, dass** der kinematische Mechanismus (20) einen Kurbel- und Stangenmechanismus mit einer Kurbel (21), die um eine Kurbelwelle (32) herum senkrecht zu der Richtung der linearen Bewegung des Kolbens (10) drehbar ist, sowie einer Antriebsstange (22) mit einer gelenkigen Verbindung an einem Ende mit der Kurbel (21) mittels eines Kurbelzapfens (23) und einer gelenkigen Verbindung an ihrem anderen Ende mit dem Kolben (10) mittels eines Kolbenbolzens (24) enthält.

6. Kolbenverdichter nach Anspruch 5, **dadurch gekennzeichnet, dass** der Kolben (10) mit dem Kurbel- und Stangenmechanismus mittels einer linearen Kolbenstange (18), die mit dem Kolben (10) verbunden ist und sich mit dem Kolben (10) synchron hin- und herbewegt, verbunden ist.

7. Kolbenverdichter nach einem der vorstehenden Ansprüche,
**dadurch gekennzeichnet, dass** der Kolbenverdichter (1) Steuerungen (27) zum Aktivieren des elektromagnetischen Antriebs (25) während des gesamten Verdichtungstakts des Kolbens (10) von dem unteren Totpunkt zu dem oberen Totpunkt des Kolbens (10) besitzt.

8. Kolbenverdichter nach Anspruch 9, **dadurch gekennzeichnet, dass** die Steuerungen (27) konfiguriert sind, um die volle Verdichtungskapazität gemäß einer Kurve zu liefern, die weitgehend der Kurve der Kapazität entspricht, die durch einen hypothetischen Antrieb des Kolbens (10) über den kinematischen Mechanismus (20) an den Kolben (10) abgegeben wird, ausschließlich mittels eines Drehmotors (6).

9. Kolbenverdichter nach einem der vorstehenden Ansprüche,
**dadurch gekennzeichnet, dass** das Gehäuse (4-8) keine Eingangs- oder Ausgangswelle zum Antreiben des Kolbens (10) enthält.

10. Kolbenverdichter nach einem der vorstehenden Ansprüche,
**dadurch gekennzeichnet, dass** der kinematische Mechanismus (20) ein Kurbel- und Stangenmechanismus mit einer Kurbelwelle (32), einem Kurbelzapfen (23) und einem Kolbenbolzen (24) ist, die ausschließlich mittels geschlossener Rollenlager gelagert sind.

11. Kolbenverdichter nach einem der vorstehenden Ansprüche,
**dadurch gekennzeichnet, dass** das Gehäuse (4-8) des Kolbenverdichters (1) mit der Verdichtungskammer mit dem Kolben und dem kinematischen Mechanismus (20) in sich ein hermetisch abgedichtetes Gehäuse ist.

12. Kolbenverdichter nach einem der vorstehenden Ansprüche,
**dadurch gekennzeichnet, dass** die Frequenz der Hin- und Herbewegung des Kolbens (10) der Eigenfrequenz des Kolbenverdichters (1) entspricht, speziell der Gesamtheit des Kolbens (10) und des kinematischen Mechanismus (20) kombiniert mit einer pneumatischen, mechanischen oder elektromechanischen Feder.

13. Kolbenverdichter nach einem der vorstehenden Ansprüche,
**dadurch gekennzeichnet, dass** es ein mehrstufiger Kolbenverdichter (1) mit mindestens zwei Verdichtungskammern (13), die mittels ihres Einlasses (14) und Auslasses (16) seriell miteinander verbunden sind, ist und in dem ein Kolben (10) mittels eines linearen elektromagnetischen Antriebs (25) hin- und herbewegt werden kann und in dem jeder Kolben (10) mit einem eigenen kinematischen Mechanismus (20) verbunden ist.

14. Kolbenverdichter nach Anspruch 13, **dadurch gekennzeichnet, dass** mindestens zwei der kinematischen Mechanismen mechanisch miteinander verbunden sind, wobei sie veranlasst werden, sich synchron miteinander zu bewegen.

15. Kolbenverdichter nach Ansprüchen 5 und 14,
**dadurch gekennzeichnet, dass,** falls der kinematische Mechanismus (20) ein Kurbel- und Stangenmechanismus ist, die Kurbeln (21) von mindestens zwei dieser Mechanismen (20) an einer gemeinsamen Kurbelwelle (32) angeordnet sind.

16. Kolbenverdichter nach Ansprüchen 8 und 13,
**dadurch gekennzeichnet, dass** die Steuerung (27) des linearen elektromagnetischen Antriebs (25) von mindestens zwei Kolben (10) gemeinsam ist.

17. Kolbenverdichter nach einem der vorstehenden Ansprüche,
**dadurch gekennzeichnet, dass** es ein Kolbenverdichter (1) mit einer maximalen Verdichtungskapazität ist, die größer als 30 kW ist.

## Revendications

1. Compresseur à piston contenant un carter (8) dans lequel se trouve une chambre de compression (13) avec une entrée et une sortie et un piston (10) agencé de manière mobile dans une direction axiale (X-X') dans la chambre de compression (13) entre un point mort supérieur et un point mort inférieur, délimité par un mécanisme cinématique (20) avec lequel le piston (10) est relié, **caractérisé en ce que** l'entraînement est formé exclusivement par un entraînement linéaire électromagnétique (25) du piston (10), dans lequel l'entraînement linéaire électromagnétique (25) contient un entraînement électromagnétique indirect du piston (10) avec un poussoir (29), agencé de manière mobile vers l'arrière et vers l'avant dans un guide linéaire (30) qui s'étend parallèlement à la direction axiale (X-X') de la chambre de compression (13), et **en ce qu'**une ou plusieurs bobines (26), agencées autour ou le long du guide linéaire (30), sont capables d'interagir par induction avec le poussoir respectif (29).

2. Compresseur à piston selon la revendication 1, **caractérisé en ce que** l'entraînement linéaire électromagnétique (25) contient un entraînement électromagnétique indirect du piston (10), dans lequel le guide (30) du poussoir (29) est agencé dans l'extension axiale (X-X') de la chambre de compression (13), et **en ce que** le poussoir (29) est agencé sur une tige (18) qui est solidement reliée mécaniquement au piston (10) et se déplace vers l'arrière et vers l'avant de manière synchrone avec le déplacement linéaire du piston (10).

3. Compresseur à piston selon la revendication 1 ou 2,
**caractérisé en ce que** le piston (10) et/ou le poussoir (29) et/ou le manteau cylindrique (9) et/ou le guide (30) comportent un ou plusieurs aimants.

4. Compresseur à piston selon la revendication 3, **caractérisé en ce qu'un** ou plusieurs aimants sont des aimants permanents.

5. Compresseur à piston selon l'une quelconque des revendications précédentes, **caractérisé en ce que** le mécanisme cinématique (20) contient un mécanisme de manivelle et de tige avec une manivelle (21) qui peut tourner autour d'un arbre à vilebrequin (32) perpendiculairement à la direction du déplacement linéaire du piston (10) ainsi qu'une tige d'entraînement (22) avec une liaison articulée à une extrémité avec la manivelle (21) au moyen d'un maneton (23) et une liaison articulée à son autre extrémité avec le piston (10) au moyen d'un axe de piston (24).

6. Compresseur à piston selon la revendication 5, **caractérisé en ce que** le piston (10) est relié avec le mécanisme de manivelle et de tige au moyen d'une tige de piston linéaire (18), reliée au piston (10) et se déplaçant vers l'arrière et vers l'avant de manière synchrone avec le piston (10).

7. Compresseur à piston selon l'une quelconque des revendications précédentes, **caractérisé en ce que** le compresseur à piston (1) comporte des commandes (27) permettant d'activer l'entraînement électromagnétique (25) pendant toute la course de compression du piston (10) du point mort inférieur jusqu'au point mort supérieur du piston (10).

8. Compresseur à piston selon la revendication 9, **caractérisé en ce que** les commandes (27) sont conçues pour délivrer la capacité de compression complète selon une courbe qui correspond en grande partie à la courbe de la capacité délivrée au piston (10) par un entraînement hypothétique du piston (10) par le biais du mécanisme cinématique (20), exclusivement au moyen d'un moteur rotatif (6).

9. Compresseur à piston selon l'une quelconque des revendications précédentes, **caractérisé en ce que** le carter (4-8) ne contient pas d'arbre d'entrée ou de sortie permettant d'entraîner le piston (10).

10. Compresseur à piston selon l'une quelconque des revendications précédentes, **caractérisé en ce que** le mécanisme cinématique (20) est un mécanisme de manivelle et de tige avec un arbre à vilebrequin (32), un maneton (23), et un axe de piston (24) qui sont exclusivement portés au moyen de roulements à rouleaux fermés.

11. Compresseur à piston selon l'une quelconque des revendications précédentes, **caractérisé en ce que** le carter (4-8) du compresseur à piston (1) dans lequel se trouve la chambre de compression avec le piston et le mécanisme cinématique (20) est un carter scellé hermétiquement.

12. Compresseur à piston selon l'une quelconque des revendications précédentes, **caractérisé en ce que** la fréquence du déplacement vers l'arrière et vers l'avant du piston (10) correspond à la fréquence propre du compresseur à piston (1), notamment de la totalité du piston (10) et du mécanisme cinématique (20) combiné à un ressort pneumatique, mécanique ou électromécanique.

13. Compresseur à piston selon l'une quelconque des revendications précédentes, **caractérisé en ce que** c'est un compresseur à piston (1) à phases multiples doté d'au moins deux chambres de compression (13) qui sont reliées en série l'une à l'autre au moyen de leur entrée (14) et de leur sortie (16), et dans lequel un piston (10) peut être déplacé vers l'arrière et vers l'avant au moyen d'un entraînement électromagnétique linéaire (25), et dans lequel chaque piston (10) est relié à son propre mécanisme cinématique (20).

14. Compresseur à piston selon la revendication 13, **caractérisé en ce que** au moins deux des mécanismes cinématiques sont reliés mécaniquement l'un à l'autre, les amenant à se déplacer de manière synchrone l'un par rapport à l'autre.

15. Compresseur à piston selon les revendications 5 et 14,
**caractérisé en ce que** si la mécanisme cinématique (20) est un mécanisme de manivelle et de tige, les manivelles (21) d'au moins deux de ces mécanismes (20) sont agencées sur un arbre à vilebrequin conjoint (32).

16. Compresseur à piston selon les revendications 8 et 13,
**caractérisé en ce que** la commande (27) de l'entraînement électromagnétique linéaire (25) d'au moins deux pistons (10) est conjointe.

17. Compresseur à piston selon l'une quelconque des revendications précédentes, **caractérisé en ce que** c'est un compresseur à piston (1) doté d'une capacité de compression maximale supérieure à 30 kW.
